# EUROPÄISCHE PATENTSCHRIFT

(11) **EP 1 526 297 B1**
(45) Veröffentlichungstag und Bekanntmachung des Hinweises auf die Patenterteilung: **28.03.2007**
(21) Anmeldenummer: 03024355.4
(22) Anmeldetag: 24.10.2003
(51) Int. Cl.: F16D 3/223, B60B 27/00

(54) **Gelenkaussenteil mit Abstützscheibe**
Joint outer part with support disc
Partie exterieure de joint avec disque de support

(43) Veröffentlichungstag der Anmeldung: 27.04.2005
(73) Patentinhaber: GKN Driveline International GmbH, 53797 Lohmar (DE)
(72) Erfinder: Nestor Rekalde, Arrieta, Herrera-San Sebastian 20017 Gipuzkoa (ES); Romatet, Joseba, 20750 Zumaia (ES); Arrillaga, Julian, 2007 San Sebastian (ES)
(74) Vertreter: Neumann, Ernst Dieter

(56) Entgegenhaltungen:
- EP-A- 1 125 765
- US-A1- 2002 049 091
- PATENT ABSTRACTS OF JAPAN vol. 2002, no. 05, 3. Mai 2002 (2002-05-03) & JP 2002 002210 A (NSK LTD), 8. Januar 2002 (2002-01-08)

## Beschreibung

Die Erfindung betrifft ein Gelenkaußenteil eines Gleichlaufdrehgelenks in Form einer Gelenkglocke mit angesetztem Verbindungszapfen und radialer Abstützfläche an der Gelenkglocke am Ansatz des Verbindungszapfens, wobei das Gelenkaußenteil mittels Verschraubungsmitteln mit einer auf den Verbindungszapfen aufzuschiebenden Radnabe verspannbar ist, die sich direkt oder indirekt an der Abstützfläche abstützen kann.

Die Erfindung betrifft weiterhin eine Anordnung aus einem Gleichlaufdrehgelenk mit einem Gelenkaußenteil in Form einer Gelenkglocke mit angesetztem Verbindungszapfen und radialer Abstützfläche an der Gelenkglocke am Ansatz des Verbindungszapfens sowie einer auf den Verbindungszapfen aufgeschobenen Radnabe, die mit dem Gelenkaußenteil mittels Verschraubungsmitteln verspannt ist, wobei sich die Radnabe direkt oder indirekt an der Abstützfläche abstützt.

Anordnungen dieser Art finden sich im Bereich der Radlagerungen von angetriebenen Fahrzeugrädern bekannter Kraftfahrzeuge. Das Gleichlaufdrehgelenk bildet hierbei das radseitige Gelenk von Antriebswellen bzw. Seitenwellen der Kraftfahrzeuge. Bei der Montage der Wellen mit der Nabenanordnung findet eine axiale Verspannung zwischen der Radnabe und dem Gelenkaußenteil über Verschraubungsmittel statt, wobei die relative Abstützung entweder über die Lagerinnenringe einer auf die Radnabe aufgezogenen Radlagerung oder über die Radnabe selber jeweils gegenüber einer Abstützfläche am Gelenkaußenteil erfolgt. Im Fahrzeugeinsatz kann es trotz hoher Verspannkräfte an der Abstützfläche des Gelenkaußenteils zu Mikrobewegungen kommen, die heftige Geräuschentwicklung verursachen. Die entsprechen Mikrobewegungen sind hierbei die Folge ungleichmäßiger Drehmomenteinleitung sowie gegebenenfalls auch von umlaufenden Biegemomenten. Selbst bei einer sorgfältigen Bearbeitung der aneinander anliegenden Oberflächen läßt sich die genannte Geräuschentwicklung bisher nicht vermeiden.

Ein gattungsgemäßer Gelenkaußenteil ist aus JP-A-2002 002210 bekannt.

Hiervon ausgehend ist es Aufgabe der vorliegenden Erfindung, eine Lösung des genannten Problems zur Unterdrückung der Geräuschentwicklung bereitzustellen. Die Lösung hierfür besteht in einem Gelenkaußenteil der genannten Art, das gekennzeichnet ist durch eine Ringscheibe aus reibungsarmem Material, die konzentrisch zum Verbindungszapfen auf der Abstützfläche aufliegt. Hierbei kann die Ringscheibe insbesondere einen vom äußeren Rand ausgehenden Zylinderabschnitt umfassen, der kraftschlüssig, d. h. mit radialer Vorspannung, auf einem entsprechenden Zylinderabschnitt an der Gelenkglocke aufsitzt.

Dementsprechend zeichnet sich eine gattungsgemäße Anordnung aus einem Gleichlaufdrehgelenk und einer Radnabe der obengenannten Art dadurch aus, daß eine Ringscheibe aus reibungsarmem Material vorgesehen ist, die konzentrisch zum Verbindungszapfen unmittelbar auf die Abstützfläche aufliegt und die Verspannkräfte der Verschraubungsmittel aufnimmt. Hierbei kann nach einer ersten Ausführungsform vorgesehen sein, daß Lagermittel auf der Radnabe aufgezogen sind, die durch Verschraubungsmittel axial vorgespannt sind und deren Lagerinnenringe sich einerseits an der Radnabe und andererseits an der Ringscheibe axial unter der Last der Verschraubungsmittel abstützen. Eine Alternative hierzu besteht darin, daß Lagermittel auf der Radnabe aufgezogen sind, deren Lagerinnenringe von einem Ringbördel an der Radnabe auf der Radnabe verspannt sind, wobei sich der Ringbördel unter der Last der Verschraubungsmittel unmittelbar an der Ringscheibe abstützt. Der Ringbördel ist hierbei durch plastische Umformung der Radnabe nach dem Aufschieben der Lagermittel erzeugt. Die reibungsarme Ringscheibe wird hierbei so gewählt, daß die Mikrobewegungen, die nunmehr zwischen Ringscheibe und Gelenkaußenteil einerseits und Ringscheibe und Lagerinnenring bzw. Bördelung andererseits aufgeteilt sind, nicht mehr zu Geräuschen führen können.

Nach einem ersten Vorschlag ist hierbei vorgesehen, daß die Ringscheibe aus einem Eisenwerkstoff besteht und eine Beschichtung aus Molykote D321 R hat. Vor dem Aufbringen dieser Beschichtung kann dabei die Ringscheibe phosphatiert oder gesandstrahlt werden. Eine andere Möglichkeit besteht darin, daß die Ringscheibe aus Bronze oder Buntmetall ist. Schließlich ist es nach einer weiteren Ausführungsform möglich, daß die Ringscheibe aus einem geeigneten widerstandsfähigem gegebenenfalls faserverstärktem Kunststoff besteht.

Bevorzugte Ausführungsbeispiele der Erfindung sind in den Zeichnungen dargestellt, die nachstehend beschrieben werden.
- Figur 1: zeigt ein Gleichlaufdrehgelenk mit einem erfindungsgemäßen Gelenkaußenteil mit Abstützscheibe im Längsschnitt;
- Figur 2: zeigt eine erfindungsgemäße Anordnung aus Gleichlaufdrehgelenk und Radnabe in einer ersten Ausführung im Längsschnitt;
- Figur 3: zeigt eine erfindungsgemäße Anordnung aus Gleichlaufdrehgelenk und Radnabe in einer zweiten Ausführung im Längsschnitt;
- Figur 4: zeigt eine erfindungsgemäße Anordnung ähnlich Figur 2 in einer abgewandelten Ausführung im Längsschnitt;
- Figur 5: zeigt eine erfindungsgemäße Anordnung ähnlich Figur 3 in einer abgewandelten Ausführung im Längsschnitt.

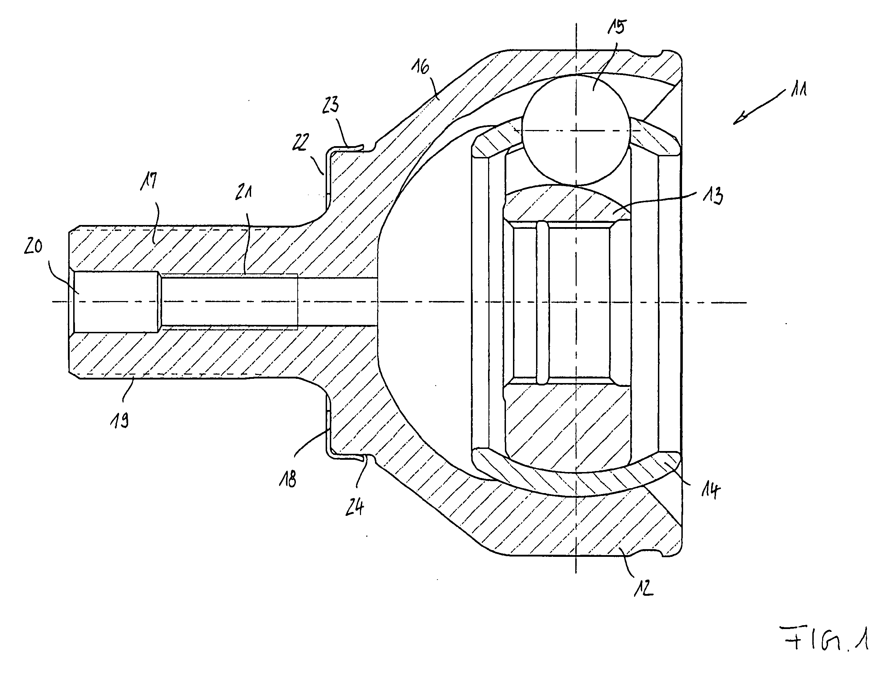

In Figur 1 ist ein Gleichlaufdrehgelenk 11 dargestellt, das ein erfindungsgemäßes Gelenkaußenteil 12, ein Gelenkinnenteil 13, einen Kugelkäfig 14 sowie eine von mehreren drehmomentübertragenden Kugeln 15 erkennen läßt. Das erfindungsgemäße Gelenkaußenteil 12 umfaßt eine Gelenkglocke 16, einen daran angesetzten Anschlußzapfen 17 sowie konzentrisch zu diesem eine radiale Abstützfläche 18. Am Anschlußzapfen 17 befindet sich außen eine Wellenverzahnung 19 zum drehmomentfesten Eingriff mit einer Radnabe 25 sowie eine Innenbohrung 20 mit einem Innengewinde 21 zum Einschrauben einer Spannschraube. Auf der radialen Abstützfläche 18 ist eine Abstützscheibe 22 aufgelegt, die an ihrem Außenumfang in einen Zylinderabschnitt 23 übergeht, der formschlüssig auf einem Zylinderabsatz 24 des Gelenkaußenteils 12 gehalten ist.

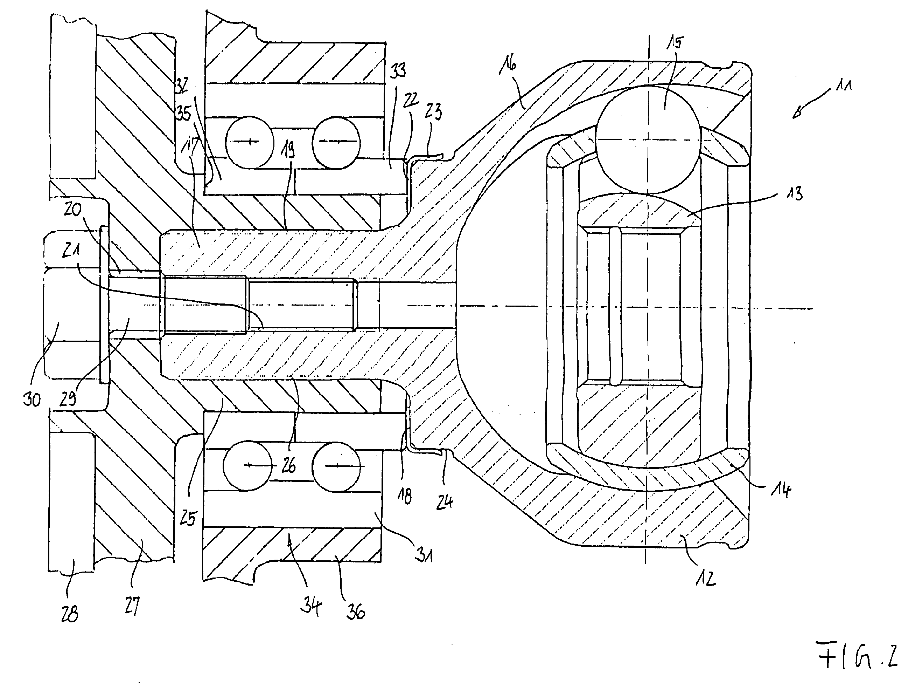

In Figur 2 sind gleiche Einzelheiten wie in Figur 1 mit gleichen Bezugsziffern belegt. Auf die Beschreibung wird insoweit Bezug genommen. Auf den Anschlußzapfen 17 ist eine Radnabe 25 aufgeschoben, die mit einer Gegenverzahnung 26 in die Wellenverzahnung 19 formschlüssig eingreift. An die Radnabe 25 schließt sich ein Radflansch 27 an, mit der eine Bremsscheibe 28 in nicht näher gezeigter Weise verbunden ist. Die Radnabe ist über eine Spannschraube 29, deren Schraubenkopf 30 sich am Radflansch 27 abstützt und die in das Innengewinde 21 der Durchgangsöffnung 20 eingeschraubt ist, mit dem Gelenkaußenteil 12 verspannt. Auf die Radnabe 25 ist ein zweireihiges Radlager 34 aufgezogen, dessen Lagerinnenringe 32, 33 sich einerseits an einem Absatz 35 des Radflansches 27 und andererseits an der Abstützscheibe 22 unter der Vorspannkraft der Schraube 29 axial abstützen. Der Lageraußenring 31 des Radlagers 34 ist in einen Radträger 36 eingesetzt. Mittels der Spannschraube 29 wird bei der gewählten Bauart des Radlagers die Lagervorspannung eingestellt.

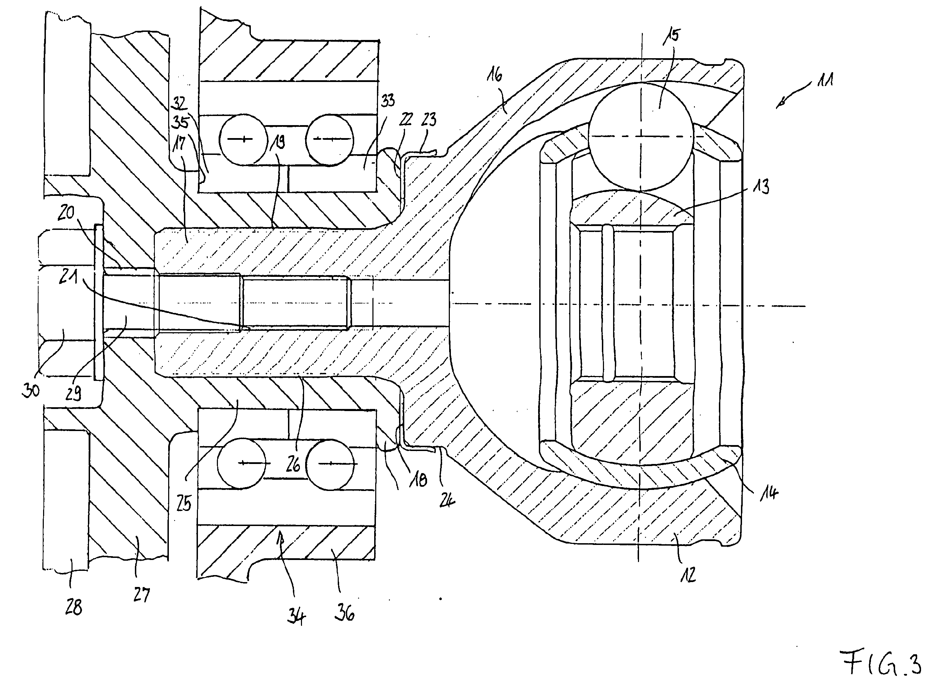

In Figur 3 sind gleiche Einzelheiten wie in Figur 1 mit gleichen Bezugsziffern belegt. Auf die Beschreibung wird insoweit Bezug genommen. Auf den Anschlußzapfen 17 ist eine Radnabe 25 aufgeschoben, die mit einer Gegenverzahnung 26 in die Wellenverzahnung 19 formschlüssig eingreift. An die Radnabe 25 schließt sich ein Radflansch 27 an, mit der eine Bremsscheibe 28 in nicht näher gezeigter Weise verbunden ist. Die Radnabe ist über eine Spannschraube 29, deren Schraubenkopf 30 sich am Radflansch 27 abstützt und die in das Innengewinde 21 der Durchgangsöffnung 20 eingeschraubt ist, mit dem Gelenkaußenteil 12 verspannt. Auf die Radnabe 17 ist ein Radlager 34 aufgezogen, dessen Lagerinnenringe 32, 33 sich an einem Absatz 35 des Radflansches 27 abstützen und die von einer Umbördelung 39 der Radnabe 25 axial verspannt und fixiert sind. Diese Umbördelung 39 liegt dabei mit einer Ringfläche an der Anschlagscheibe 22 unter der Vorspannkraft der Schraube 29 an. Auch hier ist der Lageraußenring 31 des Radlagers 34 wieder in einen Radträger 36 eingesetzt. Die Lagervorspannung wird hierbei durch den Verlauf der Herstellung und die Form der Bördelung bestimmt.

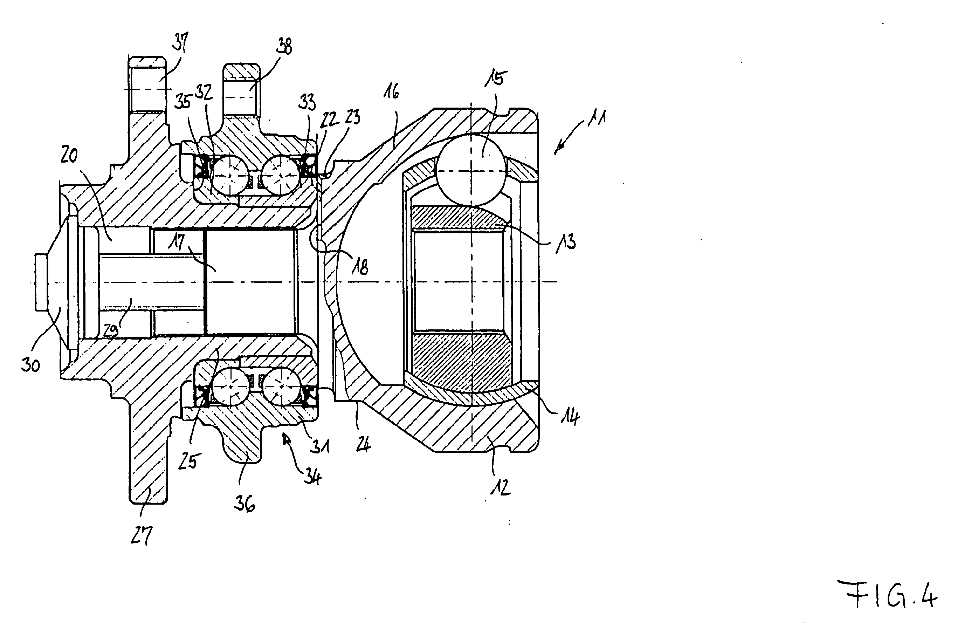

In Figur 4 sind gleiche Einzelheiten wie in Figur 2 mit gleichen Bezugsziffern belegt. Auf die Beschreibung wird insoweit Bezug genommen. Die dargestellten Teile haben geringfügig andere Geometrien, wobei insbesondere der Schraubenkopf 30 der Schraube 29 erkennbar abweicht. Die Bremsscheibe ist hier nicht eingezeichnet. Die Radlagerung ist vollständig mit Dichtungen und Lagerkäfigen gezeigt. Der Lageraußenring ist hierbei einteilig mit dem Radträger 36 ausgebildet. Im Radflansch 27 und im Radträger 36 sind Flanschlöcher 37, 38 dargestellt. Durch die Abstützscheibe 22 wird der unmittelbare Kontakt zwischen dem Lagerinnenring 33 und der Abstützfläche 18 des Gelenkaußenteils 16 vermieden, so daß unter Belastung relative Mikrobewegungen von der Abstützscheibe geräuschfrei aufgenommen werden.

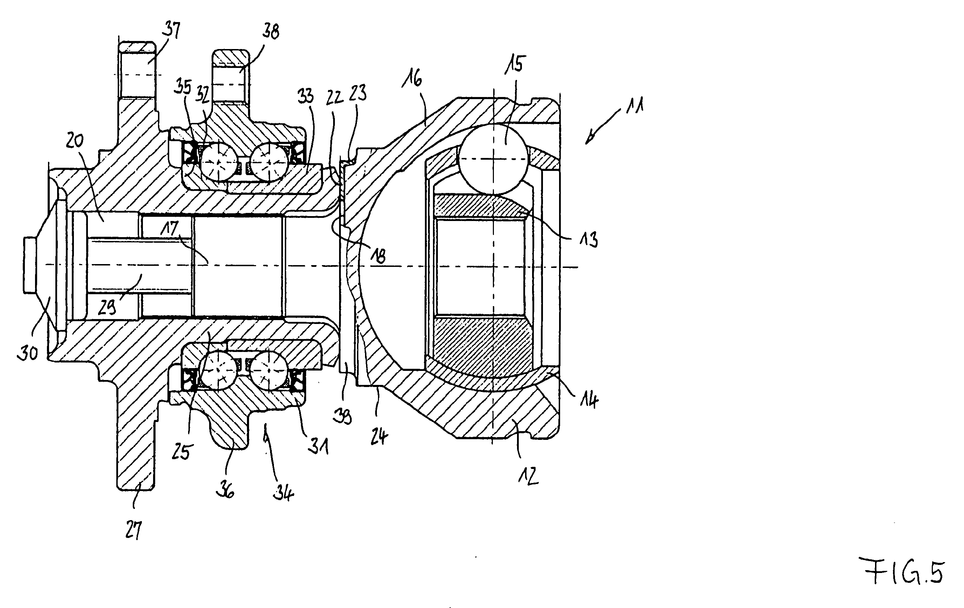

In Figur 5 sind gleiche Einzelheiten wie in Figur 2 mit gleichen Bezugsziffern belegt. Auf die Beschreibung wird insoweit Bezug genommen. Die dargestellten Teile haben geringfügig andere Geometrien, wobei insbesondere der Schraubenkopf 30 der Schraube 29 erkennbar abweicht. Die Bremsscheibe ist hier nicht eingezeichnet. Die Radlagerung ist vollständig mit Dichtungen und Lagerkäfigen gezeigt. Der Lageraußenring ist hierbei einteilig mit dem Radträger 36 ausgebildet. Im Radflansch 27 und im Radträger 36 sind Flanschlöcher 37, 38 dargestellt. Durch die Abstützscheibe 22 wird der unmittelbare Kontakt zwischen der Bördelung 39 und der Abstützfläche 18 des Gelenkaußenteils 16 vermieden, so daß unter Belastung relative Mikrobewegungen von der Abstützscheibe geräuschfrei aufgenommen werden.

### Bezugszeichenliste

- 11: Gleichlaufdrehgelenk
- 12: Gelenkaußenteil
- 13: Gelenkinnenteil
- 14: Kugelkäfig
- 15: Kugel
- 16: Glocke
- 17: Anschlußzapfen
- 18: Abstützfläche
- 19: Wellenverzahnung
- 20: Bohrung
- 21: Gewinde
- 22: Ringscheibe
- 23: Zylinderabschnitt
- 24: Zylinderabschnitt
- 25: Radnabe
- 26: Innenverzahnung
- 27: Radflansch
- 28: Bremsscheibe
- 29: Schraube
- 30: Schraubenkopf
- 31: Lageraußenring
- 32: Lagerinnenring
- 33: Lagerinnenring
- 34: Radlager
- 35: Abstützfläche
- 36: Radträger
- 37: Schraubenloch
- 38: Schraubenloch
- 39: Bördelung

## Patentansprüche

1. Gelenkaußenteil (12) eines Gleichlaufdrehgelenks (11) in Form einer Gelenkglocke (16) mit angesetztem Verbindungszapfen (17) und radialer Abstützfläche (18) an der Gelenkglocke (16) am Ansatz des Verbindungszapfens (17), wobei das Gelenkaußenteil (12) mittels Verschraubungsmitteln mit einer auf den Verbindungszapfen aufzuschiebenden Radnabe (25) verspannbar ist, die sich direkt oder indirekt an der Abstützfläche (18) abstützen kann,
**gekennzeichnet durch**
eine Ringscheibe (22) aus reibungsarmen Material, die konzentrisch zum Verbindungszapfen (17) auf der Abstützfläche (18) aufliegt.

2. Gelenkaußenteil nach Anspruch 1,
**dadurch gekennzeichnet,**
**daß** die Ringscheibe (22) vom äußeren Rand ausgehend einen Zylinderabschnitt (23) umfaßt, der kraftschlüssig auf der Gelenkglocke (16) aufsitzt.

3. Gelenkaußenteil nach Anspruch 1 oder 2,
**dadurch gekennzeichnet,**
**daß** die Ringscheibe (22) eine Beschichtung aus Molykote D321 R hat.

4. Gelenkaußenteil nach einem der Ansprüche 1 oder 2,
**dadurch gekennzeichnet,**
**daß** die Ringscheibe (22) aus Bronze oder Buntmetall ist.

5. Gelenkaußenteil nach einem der Ansprüche 1 oder 2,
**dadurch gekennzeichnet,**
**daß** die Ringscheibe (22) aus Kunststoff ist.

6. Anordnung aus einem Gleichlaufdrehgelenk (11) mit einem Gelenkaußenteil (12) in Form einer Gelenkglocke (16) mit angesetztem Verbindungszapfen (17) und radialer Abstützfläche (18) an der Gelenkglocke (16) am Ansatz des Verbindungszapfens (17) sowie einer auf den Verbindungszapfen (17) aufgeschobenen Radnabe (25), die mit dem Gelenkaußenteil (12) mittels Verschraubungsmitteln verspannt ist, wobei sich die Radnabe (25) direkt oder indirekt an der Abstützfläche (18) abstützt,
**gekennzeichnet durch**
eine Ringscheibe (22) aus reibungsarmen Material, die konzentrisch zum Verbindungszapfen (17) unmittelbar auf die Abstützfläche (18) aufliegt und die Verspannkräfte der Verschraubungsmittel aufnimmt.

7. Anordnung nach Anspruch 6,
**dadurch gekennzeichnet,**
**daß** Lagermittel (34) auf der Radnabe (25) aufgezogen sind, deren Lagerinnenringe sich einerseits an der Radnabe (25) und andererseits an der Ringscheibe (22) axial abstützen.

8. Anordnung nach Anspruch 6,
**dadurch gekennzeichnet,**
**daß** Lagermittel (34) auf der Radnabe (25) aufgezogen sind, deren Lagerinnenringe von einem Ringbördel (39) an der Radnabe (25) auf der Radnabe (25) axial verspannt sind, wobei sich der Ringbördel (39) unmittelbar an der Ringscheibe (22) axial abstützt.

9. Anordnung nach einem der Ansprüche 6 bis 8,
**dadurch gekennzeichnet,**
**daß** die Ringscheibe (22) vom äußeren Rand ausgehend einen Zylinderabschnitt (23) umfaßt, der kraftschlüssig auf der Gelenkglocke (16) aufsitzt.

10. Anordnung nach einem der Ansprüche 6 bis 9,
**dadurch gekennzeichnet,**
**daß** die Ringscheibe (22) eine Beschichtung aus Molykote D321 R hat.

11. Anordnung nach einem der Ansprüche 6 bis 9,
**dadurch gekennzeichnet,**
**daß** die Ringscheibe (22) aus Bronze oder Buntmetall ist.

12. Anordnung nach einem der Ansprüche 6 bis 9,
**dadurch gekennzeichnet,**
**daß** die Ringscheibe (22) aus Kunststoff ist.

## Claims

1. An outer joint part (12) of a constant velocity universal joint (11) in the form of a joint bell (16) with an attached connecting journal (17) and a radial supporting face (18) at the joint bell (16) at the attachment of the connecting journal (17), wherein the outer joint part (12), by means of threading means, can be clamped to a wheel hub (25) which has to be slid on to the connecting journal and which is able to support itself either directly or indirectly on the supporting face (18),
**characterised by**
an annular disc (22) which is made of a low-friction material and which is positioned on the supporting face (18) so as to be concentric relative to the connecting journal (17).

2. An outer joint part according to claim 1,
**characterised in**
**that** the annular disc (22) comprises a cylindrical portion (23) which starts from the outer edge of same and is positioned on the joint bell (16) in a force-locking way.

3. An outer joint part according to claim 1 or 2,
**characterised in**
**that** the annular disc (22) comprises a coating consisting of Molykote D321R.

4. An outer joint part according to any one of claims 1 or 2,
**characterised in**
**that** the annular disc (22) consists of bronze or nonferrous metal.

5. An outer joint part according to any one of claims 1 or 2,
**characterised in**
**that** the annular disc (22) consists of plastics.

6. An assembly consisting of a constant velocity universal joint (11) with an outer joint part (12) in the form of a joint bell (16) with an attached connecting journal (17) and a radial supporting face (18) at the joint bell (16) at the attachment of the connecting journal (17), as well as of a wheel hub (25) which is slid on to the connecting journal (17) and which, via threading means, is clamped to the outer joint part (12), wherein the wheel hub (25) is directly or indirectly supported on the supporting face (18),
**characterised by**
an annular disc (22) which is made of a low-friction material, which is positioned directly on the supporting face (18) so as to be concentric relative to the connecting journal (17) and which accommodates the clamping forces of the threading means.

7. An assembly according to claim 6,
**characterised in**
**that** on to the wheel hub (25), there are slipped bearing means (34) whose inner bearing races are axially supported on the wheel hub (25) on the one hand and on the annular disc (22) on the other hand.

8. An assembly according to claim 6,
**characterised in**
**that** on to the wheel hub (25), there are slipped bearing means (34) whose inner bearing races are axially clamped to the wheel hub (25) by annular beading (39) at the wheel hub (25), wherein the annular beading (39) is axially supported directly at the annular disc (22).

9. An assembly according to any one of claims 6 to 8,
**characterised in**
**that** the annular disc (22) comprises a cylindrical portion (23) which starts from the outer edge of same and is positioned on the joint bell (16) in a force-locking way.

10. An assembly according to any one of claims 6 to 9,
**characterised in**
**that** the annular disc (22) comprises a coating consisting of Molykote D321R.

11. An assembly according to any one of claims 6 to 9,
**characterised in**
**that** the annular disc (22) consists of bronze or nonferrous metal.

12. An assembly according to any one of claims 6 to 9,
**characterised in**
**that** the annular disc (22) consists of plastics.

## Revendications

1. Partie de joint extérieure (12) d'un joint de transmission homocinétique (11), sous la forme d'une cloche de joint (16) à laquelle est adjoint un tourillon de raccordement (17) et présentant une surface d'appui (18) radiale sur la cloche de joint (16) au niveau de l'adjonction du tourillon de raccordement (17), la partie de joint extérieure (12) pouvant être assemblée par serrage, à l'aide de moyens de vissage, à un moyeu de roue (25) à emmancher sur le tourillon de raccordement et qui peut s'appuyer directement ou indirectement sur la surface d'appui (18),
**caractérisée par** un disque annulaire ou rondelle (22) en un matériau à faible frottement, qui repose sur la surface d'appui (18), de manière concentrique au tourillon de raccordement (17).

2. Partie de joint extérieure selon la revendication 1,
**caractérisée en ce que** le disque annulaire (22) comprend, issu de son bord extérieur, un tronçon cylindrique (23) qui s'applique par une liaison par adhérence sur la cloche de joint (16).

3. Partie de joint extérieure selon la revendication 1 ou 2,
**caractérisée en ce que** le disque annulaire (22) possède un revêtement de MOLYKOTE ^{®} D321R.

4. Partie de joint extérieure selon la revendication 1 ou 2,
**caractérisée en ce que** le disque annulaire (22) est en bronze ou en un métal lourd non-ferreux.

5. Partie de joint extérieure selon la revendication 1 ou 2,
**caractérisée en ce que** le disque annulaire (22) est réalisé en une matière plastique.

6. Agencement constitué d'un joint de transmission homocinétique (11) comprenant une partie de joint extérieure (12) sous la forme d'une cloche de joint (16) à laquelle est adjoint un tourillon de raccordement (17) et présentant une surface d'appui (18) radiale sur la cloche de joint (16) au niveau de l'adjonction du tourillon de raccordement (17), ainsi que d'un moyeu de roue (25) emmanché sur le tourillon de raccordement (17) et assemblé par serrage, à l'aide de moyens de vissage, à la partie de joint extérieure (12), le moyeu de roue (25) s'appuyant directement ou indirectement sur la surface d'appui (18),
**caractérisé par** un disque annulaire ou rondelle (22) en un matériau à faible frottement, qui repose directement sur la surface d'appui (18), de manière concentrique au tourillon de raccordement (17), et absorbe les forces de serrage des moyens de vissage.

7. Agencement selon la revendication 6,
**caractérisé en ce que** sur le moyeu de roue (25) sont emmanchés des moyens de palier ou de roulement (34) dont les bagues intérieures de roulement s'appuient axialement, d'une part sur le moyeu de roue (25) et d'autre part sur le disque annulaire (22).

8. Agencement selon la revendication 6,
**caractérisé en ce que** sur le moyeu de roue (25) sont emmanchés des moyens de palier ou de roulement (34) dont les bagues intérieures de roulement sont serrées axialement sur le moyeu de roue (25) par une collerette annulaire (39) du moyeu (25), la collerette annulaire (39) s'appuyant axialement directement sur le disque annulaire (22).

9. Agencement selon l'une des revendications 6 à 8,
**caractérisé en ce que** le disque annulaire (22) comprend, issu de son bord extérieur, un tronçon cylindrique (23) qui s'applique par une liaison par adhérence sur la cloche de joint (16).

10. Agencement selon l'une des revendications 6 à 9,
**caractérisé en ce que** le disque annulaire (22) possède un revêtement de MOLYKOTE ^{®} D321R.

11. Agencement selon l'une des revendications 6 à 9,
**caractérisé en ce que** le disque annulaire (22) est en bronze ou en un métal lourd non-ferreux.

12. Agencement selon l'une des revendications 6 à 9,
**caractérisé en ce que** le disque annulaire (22) est réalisé en une matière plastique.
